# NOUVEAU FASCICULE DE BREVET EUROPEEN

(11) **EP 0 636 332 B2**
(45) Date de publication et mention de la décision concernant l'opposition: **23.06.2004**
(45) Mention de la délivrance du brevet: 08.12.1999
(21) Numéro de dépôt: 94420214.2
(22) Date de dépôt: 25.07.1994
(51) Int. Cl.: A47J 27/21

(54) **Bouilloire électrique comportant un moyen de chauffe simplifié**
Elektrisches Wasserkochgerät mit vereinfachter Heizvorrichtung
Electric water kettle with simplified heating means

(30) Priorité: 26.07.1993 FR 9309467
(43) Date de publication de la demande: 01.02.1995
(73) Titulaire: SEB S.A., 69130 Ecully (FR)
(72) Inventeur: Lacombe, Jacques, F-70100 Gray (FR)
(74) Mandataire: Somnier, Jean-Louis

(56) Documents cités:
- EP-A- 0 111 445
- EP-A- 0 285 839
- CH-A- 243 817
- DE-U- 7 632 594
- DE-U- 9 205 390
- DE-U- 9 217 353
- DE-U- 9 307 145
- US-A- 4 138 606

## Description

La présente invention se rapporte au domaine technique général des dispositifs de chauffe de fluides, et en particulier aux dispositifs destinés à porter à ébullition un liquide.

La présente invention concerne une bouilloire électrique comportant un réservoir en matière plastique et un moyen de chauffe incluant une résistance électrique associée à une plaque métallique de chauffe montée au fond du réservoir et en contact direct par sa face supérieure avec le liquide à chauffer.

Il est déjà connu de réaliser des bouilloires électriques avec un réservoir et un élément chauffant immergé, de type thermoplongeur, fixé par tout moyen approprié dans le réservoir et au voisinage dudit fond.

Les éléments chauffants immergés sont par exemple constitués de résistances tubulaires blindées dont la couche externe, en contact avec le liquide à chauffer, est réalisée en acier inoxydable ou en cuivre nickelé.

Les bouilloires électriques conçues selon ce principe sont largement répandues et permettent à l'utilisateur de porter rapidement le liquide à ébullition en raison de la forte puissance thermique qu'il est possible d'installer dans de telles bouilloires, et du bon échange thermique résultant de l'immersion de la résistance.

Il s'avère cependant que le recours à des éléments chauffants immergés rend l'opération de nettoyage du réservoir difficile voire impossible, du moins pour les zones du réservoir qui sont inaccessibles à l'utilisateur et situées sous l'élément chauffant immergé.

Par ailleurs le dépôt naturel des éléments calcaires s'effectue également directement sur le revêtement extérieur de élément chauffant, lequel ne peut être que difficilement ou incomplètement nettoyé ce qui conduit à une diminution progressive du rendement thermique de l'élément chauffant immergé.

Pour résoudre les problèmes évoqués précédemment il a déjà été proposé, notamment dans la demande de brevet EP-A-0491605, de remplacer les éléments chauffants immergés par une simple plaque de chauffe constituant le fond du réservoir d'une bouilloire électrique. Dans cette demande antérieure, la plaque métallique constituant le fond du réservoir est solidaire par sa face inférieure d'une résistance électrique, de type blindé, elle-même solidaire d'une tubulure métallique en communication avec l'intérieur du réservoir. La tubulure est pourvue d'un clapet anti-retour et agit comme une pompe thermique en chauffant le liquide dans sa section en contact avec la résistance électrique et en le rejetant de manière continue dans le réservoir. Selon ce principe la plaque métallique constituant le fond du réservoir n'agit que comme source d'apport thermique complémentaire, l'apport thermique principal étant fourni au liquide dans la portion de tubulure en contact avec la résistance électrique. En effet, l'apport thermique moyen d'une telle plaque métallique est de l'ordre de quelques watts par cm2, et par exemple de l'ordre de 5 watts par cm2. Les bouilloires électriques conçues selon ce principe permettent d'atteindre le point d'ébullition du liquide en un temps relativement court, mais présentent l'inconvénient de nécessiter le montage de nombreuses pièces formant le circuit de chauffe tubulaire. Les bouilloires électriques conçues selon ce principe s'avèrent également encombrantes et d'un coût de fabrication élevé. Par ailleurs, le recours à une pompe thermique provoque un mouvement de brassage de l'eau et de la vapeur générant des flux de vapeur et / ou d'eau à l'origine d'émissions sonores perçues négativement par le consommateur

On connaît également le document DE 92 05 390 décrivant une bouilloire électrique comportant un réservoir et une résistance électrique associée à une plaque métallique de chauffe montée au fond du réservoir et en contact direct par sa face supérieure avec le liquide à chauffer.

Le moyen de chauffe comporte en outre une plaque de diffusion thermique solidaire, d'une part, de la face inférieure de la plaque de chauffe et, d'autre part, de la résistance électrique.

Cependant, ce document ne décrit pas de thermostat pour réguler la montée en température, notamment lorsque la bouilloire fonctionne à sec.

On connaît par ailleurs également la demande EP-O285839 qui décrit une bouilloire électrique dont le fond du réservoir est formé par une plaque de chauffe métallique sous laquelle est fixée directement une résistance électrique spiralée. La plaque de chauffe est en contact thermique direct avec les parois en matière plastique du réservoir. Le système de limitation thermique est formé d'un thermostat monté en association avec un profil spécifique de la plaque de chauffe permettant la création d'un film d'eau annulaire et périphérique dans le fond du réservoir pour limiter la montée en température.

Un tel dispositif requiert, pour fonctionner, la présence d'un film d'eau et ne permet pas d'assurer, avec certitude, la maîtrise de la montée en température en fonctionnement à sec de la bouilloire.

Le but de l'invention vise en conséquence à remédier aux divers inconvénients énumérés précédemment, et à proposer une nouvelle bouilloire électrique, ne mettant pas en oeuvre d'élément chauffant immergé tout en procurant une mise en chauffe rapide du liquide, de conception particulièrement simplifiée, de coût réduit et dont la sécurité de fonctionnement est renforcée.

Un autre but de l'invention vise à proposer une nouvelle bouilloire électrique dont la puissance de chauffe est adaptée à une montée en température rapide du liquide sans provoquer une détérioration du matériau plastique constituant la bouilloire.

Un autre but de l'invention est de réaliser une nouvelle bouilloire électrique dont la réalisation et le montage de l'élément chauffant est particulièrement simple et aisé à réaliser.

Un autre but de l'invention est de réaliser une bouilloire électrique à l'aide d'un ensemble de pièces et de matériaux de coût réduit.

Les buts assignés à l'invention sont atteints à l'aide d'une bouilloire électrique selon la revendication indépendante 1.

D'autres particularités et avantages de l'invention apparaîtront et ressortiront plus en détail à la lecture de la description faite ci-après en référence aux dessins annexés, donnés à titre d'exemples illustratifs et non limitatifs, dans lesquels :
- la figure 1 montre selon une coupe transversale longitudinale partielle d'une bouilloire électrique, un détail de réalisation d'un moyen de chauffe conforme à l'invention,
- La figure 2 montre selon une vue de dessous, un moyen de chauffe conforme à l'invention.
- La figure 3 montre selon une coupe transversale partielle un exemple de montage d'un limiteur thermique sur une bouilloire électrique conforme à l'invention.
- La figure 4 montre selon une coupe transversale partielle une variante de réalisation de l'invention.

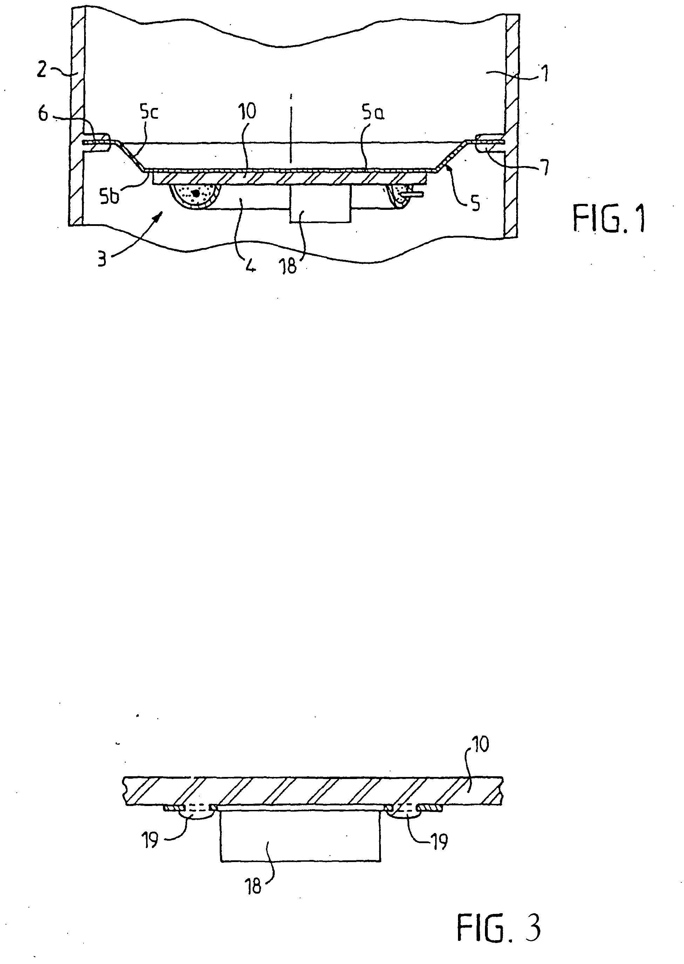

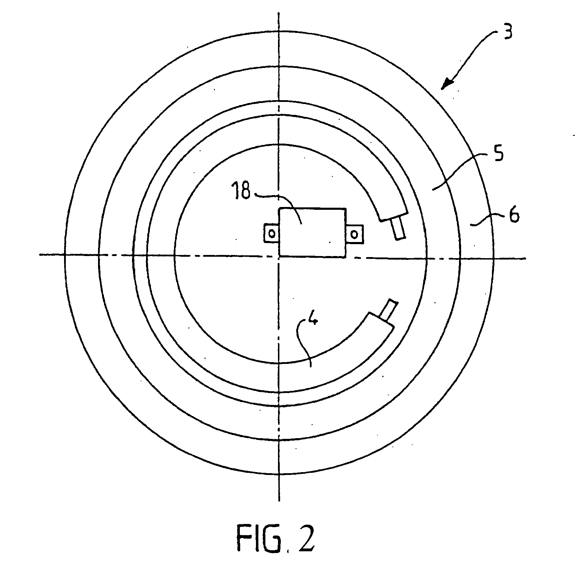

La figure 1 montre selon une vue en coupe transversale partielle un réservoir 1 limité extérieurement par une enveloppe formant les parois 2 d'une bouilloire électrique non représentée aux figures. Le réservoir 1 est destiné à servir de moyen de stockage de liquide, et en particulier d'eau pour la réalisation de boissons chaudes.

La bouilloire électrique, et en particulier les parois 2 sont avantageusement réalisées par moulage, en un matériau plastique tel que du polypropylène dont la résistance thermique est par conséquent limitée, et ne peut résister en continu à un flux thermique provenant d'une source de chaleur à haute température.

La bouilloire électrique conforme à l'invention comporte également un moyen de chauffe 3 incluant une résistance électrique 4 associée à une plaque métallique de chauffe 5 montée au fond du réservoir 1 et constituant le fond même dudit réservoir. Selon l'invention, la bouilloire électrique inclut une plaque métallique 5 sensiblement circulaire, montée en relation thermique directe avec les parois 2 par l'intermédiaire de la zone périphérique 6. Selon une version avantageuse de l'invention, la plaque de chauffe 5 est montée sur le réservoir 1 par surmoulage de la zone périphérique 6 dans la matière plastique constituant les parois 2. Tel que cela est montré par exemple à la figure 1, la zone périphérique 6 est alors, après l'opération de surmoulage, fixée et supportée par un épaulement périphérique 7 formant surépaisseur à partir des parois 2. La plaque métallique de chauffe 5 délimite ainsi le fond du réservoir 1, et est destinée à être en contact direct par sa face supérieure 5a avec le liquide à chauffer contenu dans le réservoir 1.

Le moyen de chauffe 3 comporte une résistance électrique 4 conventionnelle, par exemple de type blindé, de forte puissance (1000 à 2000 watts) capable de transmettre à la plaque de chauffe 5 une énergie thermique suffisante pour que cette dernière puisse porter à ébullition rapidement la masse de liquide contenue dans le réservoir 1. A cette fin la résistance électrique 4 devra permettre à la plaque métallique 5 d'émettre au moins 20, et de préférence 30 watts par cm2. Le moyen de chauffe 3 comporte en outre une plaque de diffusion thermique 10 interposée entre la résistance électrique 4 et la plaque métallique de chauffe 5. La plaque de diffusion thermique 10 est chargée du transfert et de la diffusion thermique sur toute la surface de la plaque métallique de chauffe 5, à partir de l'énergie thermique localisée émise par la résistance électrique 4. A cette fin, la plaque de diffusion thermique 10 est solidaire directement ou indirectement de la face inférieure 5b de la plaque de chauffe 5 d'une part, et de la résistance électrique 4 d'autre part.

Pour permettre au moyen de chauffe 3 d'assurer le chauffage rapide du liquide par la face supérieure 5a, tout en évitant à la plaque de chauffe 5 de transmettre aux parois 2 trop d'énergie thermique pour atteindre la température critique de fusion du matériau plastique, il est particulièrement important de choisir de manière spécifique les matériaux mis en oeuvre. Ainsi, la plaque de chauffe 5 sera réalisée en un matériau métallique à faible conductivité thermique, tel que l'acier inoxydable ou un acier revêtu de polytétrafluoroéthylène (PTFE) malgré la fonction prioritaire de chauffe de la masse de liquide qu'elle doit assurer. En effet, grâce à la faible conductivité thermique de l'acier inoxydable le gradient de température de la plaque métallique de chauffe 5 peut être maintenu dans la zone périphérique 6 à des valeurs compatibles avec la résistance thermique de la matière plastique constituant les parois 2 et ceci particulièrement en cas d'absence de liquide dans le réservoir 1. Inversement, la plaque de diffusion thermique 10 sera réalisée en un matériau bon conducteur de chaleur tel que l'aluminium ou encore le cuivre. Cette dernière, d'une épaisseur moyenne par exemple de l'ordre de 2,5 à 3 mm devra au contraire assurer l'interface thermique entre la résistance électrique 4 et la plaque métallique de chauffe 5, et répartir rapidement l'énergie thermique tout en étant d'une épaisseur suffisamment faible pour limiter malgré tout l'inertie thermique du moyen de chauffe 3.

Par matériau à faible conductivité thermique, il convient d'entendre au sens de l'invention tout matériau présentant, à une température comprise entre 0°C et 20°C, une conductivité thermique inférieure à 50 W/m.K et de préférence comprise entre 14 et 42 W/m.K. A titre d'exemple non limitatif, la plaque de chauffe 5 pourra être réalisée en acier faiblement allié revêtu de PTFE (41,8 W/m.K), ou en acier inoxydable Z8C17 (30 W/m.K) ou Z6CNT18-11 (14,6 W/m.K).

Par matériau bon conducteur de chaleur, il convient d'entendre selon l'invention tout matériau présentant, à une température comprise entre 0°C et 20°C, une conductivité thermique au moins égale à 100 W/m.K et de préférence comprise entre 120 et 230 W/m.K. Ainsi à titre d'exemples non limitatifs, la plaque de diffusion thermique pourra être réalisée en laiton ou plomb (120 W/m.K) ou en aluminium (229 W/m.K) ou en alliage d'aluminium 1050 A (222 W/m.K) ou 2017 A (129 W/m.K).

Quel que soit le type de matériaux utilisés, il s'avère que de bons résultats sont obtenus avec des matériaux dont le rapport conductivité thermique de la plaque de diffusion 10/conductivité thermique de la plaque de chauffe 5 est compris entre 2 et 16 et en particulier entre 3 et 10, et de préférence entre 5 et 8.

En revanche l'épaisseur de la plaque métallique de chauffe 5 est inférieure à l'épaisseur de la plaque de diffusion thermique 10, et par exemple de l'ordre de 0,3 à 1 mm, pour limiter la conductivité thermique en direction de la zone périphérique 6. Le chemin thermique entre les bords de la plaque de diffusion thermique 10 et la zone périphérique 6 peut également être allongé afin de réduire le transfert thermique. Ainsi au lieu d'être plane, la plaque métallique de chauffe 5 est emboutie pour comporter un rebord annulaire 5c joignant la zone périphérique 6 à la portion centrale solidaire de la plaque de diffusion thermique 10. Le rebord annulaire 5c forme ainsi une surface d'échange thermique avec l'extérieur permettant de faire chuter de manière sensible la température de la zone périphérique 6. La surface du rebord annulaire 5c est bien évidemment choisie en fonction du matériau plastique employé.

Tel que cela est montré à la figure 2, la résistance électrique 4 s'étend sous la plaque de diffusion thermique 10 en formant un circuit sensiblement circulaire, ou par exemple en U.

L'assemblage des différents éléments constituant le moyen de chauffe 3 peut être de manière classique réalisé par frappe à chaud de l'ensemble formé par la plaque métallique de chauffe 5 et la plaque de diffusion thermique 10 après chauffage par induction sans apport de brasure. Il est également possible d'assurer un brasage au four ou une frappe à chaud de la plaque de diffusion thermique 10 sur la plaque métallique de chauffe 5 avec apport de brasure. L'assemblage des deux plaques peut également être obtenu par frappe à froid après préparation d'une interface d'accrochage. La résistance électrique 4 peut être assemblée mécaniquement ou par brasage directement sur la face inférieure de la plaque de diffusion thermique 10, ou par tous moyens équivalents.

A titre de variante, le moyen de chauffe 3 peut être assemblé autrement que par surmoulage sur les parois 2. Ainsi la plaque métallique de chauffe 5 peut être assemblée mécaniquement par sa périphérie 6 sur l'épaulement périphérique 7, et par exemple par vissage, collage avec ou sans adjonction d'un joint d'étanchéité tel qu'un cordon de silicone polymérisable.

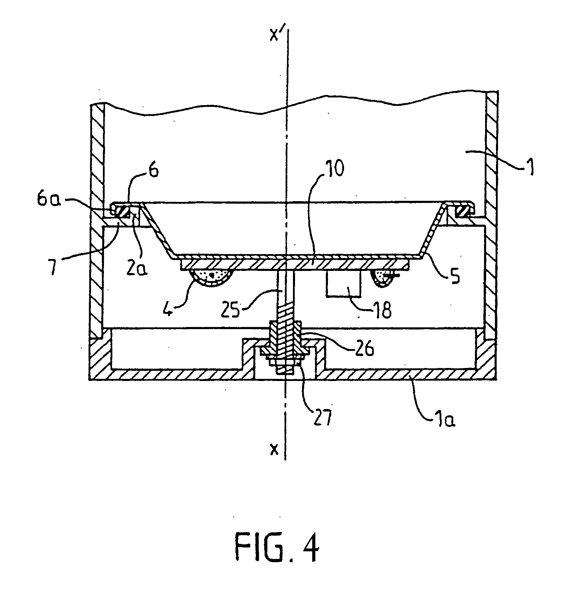

Selon une version préférentielle de l'invention, montrée à la figure 4 la plaque de chauffe 5 repose par sa périphérie 6 sur un bord tombé 2a dirigé vers la partie supérieure du réservoir 1 et formant l'extrémité de l'épaulement périphérique 7. La plaque de chauffe 5 est fixée sur le fond la du réservoir 1 par l'intermédiaire d'un goujon 25, solidaire, par exemple par soudage, de la plaque de diffusion thermique 10. L'assemblage est ajusté à l'aide d'un ensemble comportant une pièce entretoise thermique 26 et un écrou 27 permettant une mise en tension axiale de la plaque de chauffe 5 selon axe de symétrie x-x' du réservoir 1, et son appui étanche sur le bord tombé 2a. Avantageusement, l'étanchéité est améliorée par l'interposition d'un cordon de silicone entre le fond de l'épaulement périphérique 7 et la périphérie 6 dont l'extrémité forme avantageusement un bord périphérique 6a dirigé vers le fond 1a.

La bouilloire électrique conforme à l'invention et équipée d'un moyen de chauffe 3 tel que décrit précédemment comporte un limiteur thermique 18, tel qu'un thermostat et/ou un fusible de sécurité thermique, monté sur la plaque de diffusion thermique. Avantageusement, tel que cela est montré aux figures 1 à 3, le limiteur thermique 18 est monté sur la face inférieure de la plaque de diffusion thermique 10 et maintenu en place par tout moyen approprié et par exemple par vissage.

Tel que cela est montré à la figure 3, le limiteur thermique 18 est préférentiellement monté sur la plaque de diffusion thermique 10 à l'aide de rivets 19 solidaires de la plaque de diffusion thermique 10. D'autres types de fixations sont bien évidemment envisageables sans pour autant sortir du cadre de l'invention.

La bouilloire électrique conforme à l'invention permet en conséquence de porter rapidement à ébullition la masse de liquide contenue dans le réservoir 1 sans que la température critique de résistance thermique du matériau plastique constituant les parois 2 du réservoir 1 soit atteinte. La structure du moyen de chauffe 3 permet ainsi d'avoir recours à une résistance électrique fournissant une forte puissance thermique localisée, et de répartir cette énergie thermique sur toute la surface de la plaque métallique de chauffe 5 sans risque de dégradation du matériau plastique. Les matériaux utilisés ainsi que les moyens mis en oeuvre sont particulièrement simples, d'un coût unitaire réduit et d'un montage simplifié. La sécurité de fonctionnement est renforcée, puisque même en fonctionnement à sec, i.e. en l'absence d'eau, l'énergie thermique diffusée aux parois 2 est limitée.

## Revendications

1. Bouilloire électrique comportant un réservoir (1) en matière plastique et un moyen de chauffe (3) incluant au moins une résistance électrique (4) associée à une plaque métallique de chauffe (5) montée au fond du réservoir (1), le réservoir comportant des parois (2) en matière plastique qui sont en contact avec un liquide à chauffer contenu dans le réservoir alors que la plaque métallique de chauffe (5), étant montée sur le réservoir en matière plastique est en contact direct par sa face supérieure (5a) avec le liquide à chauffer et est en relation thermique directe par une zone périphérique (6) avec les parois (2) dudit réservoir (1), la résistance électrique (4) étant d'une puissance adaptée pour permettre à la plaque métallique de chauffe (5) d'assurer à elle seule la chauffe du liquide, la structure du moyen de chauffe (3) étant agencé de manière à ce qu'il n'y ait pas de risque de dégradation du matériau plastique des parois (2) du réservoir (1), la plaque métallique de chauffe (5) comportant à cet effet un rebord annulaire (5c) **caractérisée en ce que** :
- le moyen de chauffe (3) inclut une plaque de diffusion thermique (10) solidaire d'une part de la face inférieure (5b) d'une portion centrale de la plaque métallique de chauffe (5) et, d'autre part, de la résistance électrique (4) en cercle ouvert ou en U, fournissant une forte puissance thermique localisée,
- l'épaisseur de la plaque de diffusion thermique (10) est supérieure à celle de la plaque métallique de chauffe (5) mais suffisamment faible pour limiter l'inertie thermique du moyen de chauffe (3),
- le rebord annulaire conique (5c) de la plaque métallique de chauffe (5) joint en descendant la zone périphérique (6) à ladite portion centrale de la plaque métallique de chauffe (5) en ne s'étendant pas au-dessous d'un plan suivant lequel s'étend ladite portion centrale, et
- un limiteur thermique (18) est monté sur la plaque de diffusion thermique (10).

2. Bouilloire électrique selon la revendication 1, **caractérisée en ce que** la plaque de chauffe (5) est réalisée en un matériau métallique présentant, à une température comprise entre 0°C et 20°C, une conductivité thermique inférieure à 50 W/m.K alors que la plaque de diffusion thermique (10) est réalisée en un matériau présentant, à une température comprise entre 0°C et 20°C, une conductivité thermique supérieure à 100 W/m.K

3. Bouilloire selon la revendication 2, **caractérisée en ce que** le rapport conductivité thermique de la plaque de diffusion (10) / conductivité de la plaque de chauffe (5) est compris entre 2 et 16, en particulier entre 3 et 10.

4. Bouilloire selon l'une des revendications 1 à 3, **caractérisée en ce que** la plaque de chauffe (5) est en acier inoxydable ou en acier revêtu de PTFE, et la plaque de diffusion thermique (10) en aluminium, en alliage d'aluminium ou en cuivre.

5. Bouilloire selon l'une des revendications 1 à 4, **caractérisée en ce que** la plaque de chauffe (5) est montée sur le réservoir (1) par surmoulage de sa périphérie (6) dans la matière plastique du réservoir (1).

6. Bouilloire selon l'une des revendications 1 à 4 **caractérisée en ce que** la plaque de chauffe (5) est assemblée mécaniquement par sa périphérie (6) sur un épaulement (7a) de la paroi (2) du réservoir (1).

7. Bouilloire selon la revendication 6, **caractérisée en ce que** la plaque de chauffe (5) repose par sa périphérie (6) sur épaulement (7a) et est fixée sur le fond du réservoir (1) par un goujon (20) solidaire de la plaque de diffusion thermique (10).

8. Bouilloire selon l'une des revendications 1 à 7, **caractérisée en ce que** le limiteur thermique (18) est solidaire de la face inférieure de la plaque de diffusion (10) et fixé par rivetage ou vissage sur ladite plaque.

## Patentansprüche

1. Elektrischer Wasserkocher mit einem Behälter (1) aus Plastik und einer Heizeinrichtung (3), die zumindest einen elektrischen Widerstand (4) aufweist, der mit einer metallischen Heizplatte (5) verbunden ist, die am Boden des Behälters (1) angebracht ist, wobei der Behälter Wände (2) aus Plastik aufweist, die in Kontakt mit einer zu erhitzenden Flüssigkeit stehen, die in dem Behälter enthalten ist, während die metallische Heizplatte (5), die an dem Behälter aus Plastik befestigt ist, durch ihre Oberseite (5a) in direktem Kontakt mit der zu erhitzenden Flüssigkeit steht und durch einen Randbereich (6) in direkter thermischer Verbindung mit den Wänden (2) des Behälters (1) steht, wobei die Leistung des elektrischen Widerstands (4) derart passend ausgelegt ist, dass die metallische Heizplatte (5) allein die Erhitzung der Flüssigkeit sicherstellt, wobei die Struktur der Heizeinrichtung (3) so gestaltet ist, dass kein Risiko für die Verschlechterung des Plastikmaterials der Wände (2) des Behälters (1) auftritt, wobei die metallische Heizplatte hierfür eine ringförmige Leiste (5c) aufweist,
**dadurch gekennzeichnet, dass**
- die Heizeinrichtung (3) eine thermische Diffusionsplatte (10) aufweist, die einerseits mit der Unterseite (5b) eines mittleren Bereiches der metallischen Heizplatte (5) und andererseits mit dem elektrischen Widerstand (4) verbunden ist, der die Form eines offenen Kreises hat oder U-förmig ausgebildet ist, der eine starke lokalisierte thermische Leistung liefert,
- die Dicke der thermischen Diffusionsplatte größer als die Dicke der metallischen Heizplatte (5) ist, jedoch dünn genug, um die thermische Trägheit der Heizeinrichtung (3) zu begrenzen,
- die konische ringförmige Leiste (5c) der metallischen Heizplatte (5) den Randbereich (6) absteigend mit dem mittleren Bereich der metallischen Heizplatte verbindet und sich nicht unterhalb einer Ebene erstreckt, in der der mittlere Bereich liegt, und
- ein thermischer Begrenzer (18) auf der thermischen Diffusionsplatte (10) angebracht ist.

2. Elektrischer Wasserkocher nach Anspruch 1, **dadurch gekennzeichnet, dass** die Heizplatte (5) aus einem metallischen Material besteht, das bei einer Temperatur zwischen 0°C und 20 °C eine thermische Leitfähigkeit aufweist, die geringer als 50 W/m·K ist, während die thermische Diffusionsplatte (10) aus einem Material besteht, das bei einer Temperatur zwischen 0 °C und 20 °C eine thermische Leitfähigkeit aufweist, die größer als 100 W/m·K ist.

3. Wasserkocher nach Anspruch 2, **dadurch gekennzeichnet, dass** das Verhältnis der thermischen Leitfähigkeit der Diffusionsplatte (10) zur Leitfähigkeit der Heizplatte (5) zwischen 2 und 16, insbesondere zwischen 3 und 10 liegt.

4. Wasserkocher nach einem der Ansprüche 1 bis 3, **dadurch gekennzeichnet, dass** die Heizplatte (5) aus nichtoxidierbarem Stahl oder aus mit PTFE beschichtetem Stahl besteht, und die thermische Diffusionsplatte (10) aus Aluminium, aus einer Aluminiumlegierung oder aus Kupfer besteht.

5. Wasserkocher nach einem der Ansprüche 1 bis 4, **dadurch gekennzeichnet, dass** die Heizplatte in dem Behälter (1) durch Eingießen ihres Randes (6) in das Plastikmaterial des Behälters (1) angeordnet ist.

6. Wasserkocher nach einem der Ansprüche 1 bis 4, **dadurch gekennzeichnet, dass** die Heizplatte (5) mechanisch durch ihren Rand (6) auf einer Schulter (7a) der Wand (2) des Behälters (1) angeordnet ist.

7. Wasserkocher nach Anspruch 6, **dadurch gekennzeichnet, dass** die Heizplatte (5) mit ihrem Rand (6) auf der Schulter (7a) aufliegt und auf dem Boden des Behälters (1) mit einem Bolzen (25) befestigt ist, der mit der thermischen Diffusionsplatte (10) fest verbunden ist.

8. Wasserkocher nach einem der Ansprüche 1 bis 7, **dadurch gekennzeichnet, dass** der thermische Begrenzer (18) fest mit der Unterseite der Diffusionsplatte (10) verbunden und durch Vernieten oder Verschrauben auf der Platte befestigt ist.

## Claims

1. An electric kettle comprising a reservoir (1) of plastic material and a heating means (3) including at least one electric resistance (4) associated with a metal heating plate (5) mounted at the bottom of the reservoir (1), the reservoir (1) comprising walls (2) of plastic material which are in contact with a liquid for heating contained in the reservoir while the metal heating plate (5), being mounted on the plastic reservoir, is in direct contact by its upper surface (5a) with the liquid for heating and is in direct thermal relation via a peripheral zone (6) with the walls (2) of the said reservoir, the electric resistance (4) being of a power adapted to allow the metal heating plate (5) itself on its own to ensure heating of the liquid, the structure of the heating means (3) being so arranged that there is no risk of degradation of the plastic material of the walls (2) of the reservoir (1), the metal heating plate (5) having for this purpose an annular rim (5c), **characterised in that**:
- the heating means (3) includes a thermal diffusion plate (10) connected on the one hand to the bottom surface (5b) of a central portion of the metal heating plate (5) and, on the other hand, to the electric resistance (4) in the form of an open circle or a U, providing a high localised thermal power,
- the thickness of the thermal diffusion plate (10) is greater than that of the metal heating plate (5) but thin enough to limit the thermal inertia of the heating means (3),
- the conical annular rim (5c) of the metal heating plate (5) in the downward direction joins the peripheral zone (6) to the said central portion of the metal heating plate (5) while not extending below a plane along which the said central portion extends, and
- a thermal limiter (18) is mounted on the thermal diffusion plate (10).

2. An electric kettle according to claim 1, **characterised in that** the heating plate (5) is made of a metal material which, at a temperature between 0°C and 20°C, has a thermal conductivity less than 50 W/m.K while the thermal diffusion plate (10) is made of a material which, at a temperature between 0°C and 20°C, has a thermal conductivity greater than 100 W/m.K.

3. A kettle according to claim 2, **characterised in that** the ratio of the thermal conductivity of the diffusion plate (10) to the conductivity of the heating plate (5) is between 2 and 16, particularly between 3 and 10.

4. A kettle according to any one of claims 1 to 3, **characterised in that** the heating plate (5) is of stainless steel or PTFE-coated steel, and the thermal diffusion plate (10) is of aluminium, aluminium alloy, or copper.

5. A kettle according to any one of claims 1 to 4, **characterised in that** the heating plate (5) is mounted on the reservoir (1) by sheathing its periphery (6) in the plastic material of the reservoir (1).

6. A kettle according to any one of claims 1 to 4, **characterised in that** the heating plate (5) is assembled mechanically by its periphery (6) on a shoulder (7a) of the wall (2) of the reservoir (1).

7. A kettle according to claim 6, **characterised in that** the heating plate (5) rests by its periphery (6) on the shoulder (7a) and is fixed on the bottom of the reservoir (1) by a pin (20) connected to the thermal diffusion plate (10).

8. A kettle according to any one of claims 1 to 7, **characterised in that** the thermal limiter (18) is connected to the bottom surface of the diffusion plate (10) and fixed on said plate by riveting or screwing.
